# EUROPÄISCHE PATENTSCHRIFT

(11) **EP 0 564 687 B1**
(45) Veröffentlichungstag und Bekanntmachung des Hinweises auf die Patenterteilung: **23.07.1997**
(21) Anmeldenummer: 92106250.1
(22) Anmeldetag: 10.04.1992
(51) Int. Cl.: B64F 1/22, B60P 3/11

(54) **Abschleppgerät**
Towing device
Dispositif de remorquage

(43) Veröffentlichungstag der Anmeldung: 13.10.1993
(73) Patentinhaber: DOLL FAHRZEUGBAU GMBH, D-77728 Oppenau (DE)
(72) Erfinder: Eckenfels, Josef, W-7604 Appenweier (DE)
(74) Vertreter: Vogeser, Werner, Dipl.-Ing.

(56) Entgegenhaltungen:
- EP-A- 0 126 386
- CH-A- 670 802
- DE-A- 3 014 767
- DE-A- 3 327 629
- DE-U- 7 925 944
- GB-A- 2 248 215

## Beschreibung

Bei jedem Fahrzeug kann sich das Problem stellen, daß das Fahrzeug abgeschleppt werden muß, und wegen einer Beschädigung eines der Räder des Fahrzeuges ein Schleppen des Fahrzeuges auf eigenen Rädern nicht mehr möglich ist.

Dieses Problem ist bei Luftfahrzeugen mit ihren empfindlichen Fahrwerken gravierend. Besonders bei Militärflugzeugen mit ihren hohen Landegeschwindigkeiten und hohen Zuladungen kommt es bei Start und Landung häufig zu Reifenpannen. Einerseits soll beim Abschleppen eines von der Landebahn abgekommenen Flugzeuges mit defektem Fahrwerk eine zusätzliche Beschädigung des Rades oder Fahrwerkes während des Abschleppens aufgrund der hohen Kosten vermieden werden und andererseits soll in der Regel das Flugzeug möglichst schnell und zuverlässig auch unter erschwerten Bedingungen abgeschleppt werden, beispielsweise um die Start- und Landebahn wieder frei zu bekommen. Dies gilt besonders für Militärflugzeuge.

Aus der DE-U-79 25 944 ist bereits ein Abschleppgerät bekannt, bei dem das Bugrad eines Flugzeuges zwischen die Schenkel eines in der Aufsicht U-förmig gestelteten Abschleppgerätes auf eine tragende Plattform hinaufgezogen werden kann, indem die freie Hinterkante der Plattform auf den Boden abgesenkt werden kann. Dieses Abschleppgerät ist jedoch mehr zum Abschleppen eines Flugzeuges mit noch funktionierendem Bugrad als zum Bergen von Flugzeugen mit defektem Bugfahrwerk geeignet.

Es ist daher die Aufgabe gemäß der Erfindung, ein möglichst autarkes, einfach zu bedienendes und einfach aufgebautes Abschlepp- und Bergegerät mit hoher Zuverlässigkeit zu schaffen, mit dem einzelne bzw. eng benachbarte Räder eines Fahrzeuges, die nicht mehr selbst fahrfähig sind, aufgenommen werden können und damit das gesamte Fahrzeug abgeschleppt werden kann.

Diese Aufgabe ist durch den kennzeichnenden Teil des Anspruchs 1 bzw. 2 gelöst. Vorteilhafte Ausführungsformen ergeben sich aus den Unteransprüchen.

Durch die in der Aufsicht U-förmige Gestaltung des Abschleppgerätes mit einer tiefliegenden, tragenden Plattform im Freiraum der U-förmigen Gestaltung kann das defekte Rad, wenn es einmal auf der Plattform steht, aufgrund der drei gegenüber der Plattform erhöhten Schenkel, die die Plattform umgeben und zusammen die U-förmige Gestalt bilden, nicht mehr von der Plattform unabsichtlich abrutschen. Lediglich auf der vierten Seite ist eine Sicherung gegen das Herabrutschen des defekten Rades vorzusehen.

Durch die Anordnung je einer Radeinheit am freien Ende jedes freien Schenkels sowie an den Ecken des verbindenedn Schenkels des Abschleppgerätes wird die Standsicherheit des Abschleppgerätes erhöht.

Mittels der Absenkeinrichtung kann die freie Kante der Plattform gegenüber den Radeinheiten an den freien Schenkeln bis auf den Untergrund abgesenkt werden. Das erleichtert einerseits das Hinauffahren oder Hinaufschieben des defekten Rades auf die Plattform und ermöglicht andererseits bei aufgesatteltem, defekten Rad ein Abbremsen des Abschleppgerätes, z. B. in abschüssigem Gelände, indem die Plattform bis auf den Untergrund abgelassen wird und eine hohe Reibung zwischen Plattform und Untergrund entsteht.

Indem ein zwischen den Enden der freien Schenkel vorgesehener Schieber leicht entfernbar ist, kann das Abschleppgerät bei entferntem Schieber mit der offenen Seite seiner U-förmigen Gestaltung, also der freien Kante der Plattform, im abgesenkten Zustand bis unmittelbar an das beschädigte Rad herangefahren werden.

Anschließend wird - auf der von der Plattform abgewandten Seite des defekten Rades - der Schieber zwischen die freien Enden des Abschleppgerätes eingesetzt und entlang der freien Schenkel in Richtung auf die Plattform mittels einer Zugeinrichtung bewegt, wodurch das defekte Rad auf die tragende Plattform hinaufgeschoben wird.

Das aufgesattelte Rad bleibt bezüglich der vorher freien Seite des U-förmigen Abschleppgerätes durch den Schieber gegen Herabrutschen oder Herabfahren gesichert. Dieser muß sich in einer ausreichenden Höhe über der tragenden Plattform befinden, ebenso wie auch die drei die Plattform umgebenden Schenkel der U-förmigen Gestaltung eine ausreichende maximale Höhe zur Absicherung des defekten Rades besitzen müssen.

Bei aufgesatteltem defektem Rad wird das Abschleppgerät mittels einer Deichsel gezogen, wobei im vorderen, verbindenden Schenkel des Abschleppgerätes zwei lenkbare Radeinheiten untergebracht sind.

Vorzugsweise sind diese Radeinheiten nicht frei drehbar gelagert, sondern ihre Lenkung erfolgt in Abhängigkeit vom Lenkeinschlag der Deichsel. Dies geschieht vorzugsweise dadurch, daß sowohl die Deichsel als auch die vorderen Radeinheiten mittels Drehkränzen mit im wesentlichen senkrechten Drehachsen im Abschleppgerät gelagert sind und die Drehkränze der vorderen Radeinheiten mit dem Drehkranz der Deichsel über ein Zwischenzahnrad miteinander verbunden sind, so daß sie bei Auslenken der Deichsel gleichwirkend ausgelenkt werden.

Die Radeinheiten bestehen dabei vorzugsweise aus mehreren nebeneinander angeordneten, massiven Kunststoffrollen, um eine große Auflagefläche zu erhalten. Aufgrund der geringen Bewegungsgeschwindigkeiten des Abschleppgerätes sind Rollen aus massivem Material ausreichend.

Das Bergen eines Luftfahrtgerätes geht wie folgt vor sich:

Zunächst wird - bei einem bis ans äußerste Ende der freien Schenkel verfahrenen Schieber - der Schieber entfernt und das nun offene, U-förmige Abschleppgerät mit seiner offenen Seite an das defekte Rad bzw. Fahrwerk des Flugzeuges herangefahren.

Dann wird die freie Kante der tragenden Plattform des Abschleppgerätes bis auf den Untergrund abgelassen und das Abschleppgerät bis auf Anlage an bzw. unter das defekte Rad herangefahren. Der Schieber wird nun hinter dem defekten Rad, also auf der von der tragenden Plattform abgewandten Seite des defekten Rades, zwischen den freien Schenkeln befestigt und mittels der Zugeinrichtung in Richtung auf die Plattform herangezogen, wobei der Schieber das defekte Rad auf die Plattform hinaufschiebt.

Dabei kann der Schieber entweder mit der Schubrolle oder dem schräg aufragenden, festen Schubschild gegen das Rad drücken. Das Schubschild wird dabei eingesetzt, wenn der Gummi des Rades fest am Boden angeklebt ist. Dieser Gummi wird dann vom Schubschild wie von einem Messer vom Boden abgeschnitten.

Anschließend wird die Plattform mit dem daraufstehenden defekten Rad angehoben, um eine ausreichende Bodenfreiheit zum Fahren und Lenken des Abschleppgerätes zu gewinnen. Nur für die oben beschriebenen Notbremsungen wird die Plattform erneut bis auf den Untergrund herabgelassen.

Anstelle eines vollständigen Entfernen des Schiebers kann dieser auch nur in Verbindung mit einem der freien Schenkel gelöst und am anderen freien Schenkel verschwenkt werden, um einen freien Zugang des defekten Rades zur Plattform zu ermöglichen.

Falls es sich bei dem defekten Rad um ein Bugfahrwerk eines Flugzeuges handelt, wird die Deichsel des Abschleppgerätes durch die spezielle Schleppstange dieses Flugzeugtypes ersetzt und direkt mit einem Zugfahrzeug verbunden, welches mittels des Abschleppgerätes das gesamte Flugzeug zieht.

Handelt es sich bei dem defekten Fahrwerk um eines der Hauptfahrwerke, die sich in der Regel unter den Flügeln des Flugzeuges befinden, so wird am Bugfahrwerk in üblicher Weise mittels der Schleppstange ein Zugfahrzeug angehängt und das Flugzeug geschleppt, während das unter dem defekten Hauptfahrwerk angeordnete Abschleppgerät mittels der Deichsel lediglich von Hand in die gewünschte Richtung gelenkt wird.

Das Betätigen der Zugeinrichtung sowie der Absenkvorrichtung erfolgt vorzugsweise hydraulisch, wobei wenigstens eine im Abschleppgerät angeordnete hydraulische Pumpe mittels Handschwengel betätigt wird. Auch die entsprechenden Ventilstellungen werden von Hand eingestellt.

Dadurch ist für das Bergen eines Luftfahrzeuges jedes beliebige Zugfahrzeug geeignet, ohne daß an diesem Zugfahrzeug spezielle Hydraulikanschlüsse, Druckluftanschlüsse oder ähnliches zur Energieversorgung des Abschleppgerätes vorhanden sein müssen.

Die tragende Plattform des Abschleppgerätes wird abgesenkt und gehoben mittels je eines in den freien Schenkeln angeordneten hydraulischen Zylinders, der schräg nach oben ragt und auf einen Hebel einwirkt, der einerseits mit einer der Radeinheiten am freien Schenkel und andererseits mit dem freien Schenkel schwenkbar verbunden ist.

Durch Betätigen des Hydraulikzylinders werden die freien Schenkel des Abschleppgerätes und damit auch die freie Kante dessen tragender Plattform gegenüber den Radeinheiten an den freien Schenkeln abgesenkt.

Der Schieber ist an den freien Schenkeln mittels Laufelementen beidseits befestigt, die vorzugsweise wenigstens je eine Rolle aufweisen, die in einem zum Innenraum des Abschleppgerätes offenen, in Längsrichtung der freien Schenkel verlaufenden C-Profil geführt sind.

An diesen Laufelementen kann der Schieber mittels zweier paralleler, seitlicher Schenkel in verschiedenen Positionen in Längsrichtung des Abschleppgerätes befestigt werden. Dies geschieht am einfachsten mittels Steckbolzen, die durch eine von mehreren - sowohl in den Schenkeln als auch in den Laufelementen - vorhandenen, fluchtenden Bohrungen eingesteckt werden können.

Eine andere Lösung besteht darin, den Schieber an einem der Laufelemente drehbar um eine im wesentlichen senkrechte oder parallel zur Längsrichtung des Abschleppgerätes waagerechte Schwenkachse zu befestigen, und lediglich die Verbindung zum anderen Laufelement entfernbar zu gestalten.

Dadurch muß nur eine Verbindung zum Öffnen des Abschleppgerätes gelöst und dann der Schieber lediglich in die geöffnete Position geschwenkt werden. Bei starken Beschädigungen am Fahrwerk kann der in der geöffneten Stellung dann noch mit dem Abschleppgerät verbundene Schieber jedoch gerade zu Behinderungen oder Beschädigungen bei der Bergung führen.

Das Wesentliche am Schieber ist ein quer zur Längsrichtung des Abschleppgerätes angeordnetes, das defekte Rad schiebendes Element. Dabei sind parallel zueinander sowohl eine drehbar gegenüber den seitlichen Schenkeln gelagerte Schubrolle als auch ein fest mit den Schenkeln verbundener Schubschild vorhanden. Der Schieber selbst kann dabei zumindest in der vollständig entfernbaren Version wahlweise so eingesetzt werden, daß entweder die Schubrolle oder der Schubschild gegen das defekte Rad gerichtet sind, je nach dem, welches der beiden Elemente besser für die momentane Bergungssituation geeignet ist.

Falls das defekte Rad sich noch drehen kann und nicht allzu unrund ist, wird vorzugsweise die Schubrolle eingesetzt, um ein weniger reibungsintensives Abrollen der Schubrolle am ebenfalls während des Aufsattelns drehenden, defekten Rad zu ermöglichen.

Ist dagegen das defekte Fahrwerk soweit geschädigt, daß das defekte Rad nur noch ohne Drehung auf die Plattform hinaufgeschoben werden kann, so wird der nicht drehende Schubschild eingesetzt werden, da in diesem Fall die drehbare Schubrolle die Gefahr in sich birgt, daß das nicht mehr drehende, defekte Rad über die drehbare Schubrolle wegspringt. Zusätzlich schabt der Schubschild knapp über dem Boden und schneidet dadurch die am Boden haftenden Gummireste ab.

Die tragende Plattform weist an ihrem von der freien Kante gegenüberliegenden Ende eine quer zur Längsrichtung des Abschleppgerätes verlaufende feste Anschlagfläche auf, um beim Hinaufschieben des defekten Rades dieses Rad fest bis in Anlage an die feste Anschlagfläche zu drücken. Zusätzlich ist eine entfernbare, schräg gestellte Anschlagfläche vorhanden, die in verschiedenen Längspositionen auf der Plattform befestigbar ist, um ein defektes Rad aus Gründen der Gewichtsverteilung, der unterschiedlichen Raddurchmesser etc. an einer bestimmten Längsposition auf der Plattform zu halten.

Die Schubeinrichtung umfaßt in jedem der freien Schenkel wenigstens einen hydraulischen Schiebezylinder, der in Längsrichtung der freien Schenkel angeordnet ist und die Laufelemente, an denen der Schieber befestigt ist, entlang der freien Schenkel bewegt.

Im verbindenden Schenkel des Abschleppgerätes ist wenigstens eine hydraulische Pumpe sowie wenigstens ein Tank für Hydraulikflüssigkeit angeordnet. Die hydraulische Pumpe wird mittels eines Handschwengels betätigt, wobei wahlweise zusätzlich externe Hydraulikanschlüsse vorhanden sein können.

Die Handschwengel wirken über eine drehbare Welle auf die Hydraulikpumpe ein, wobei sich diese Welle quer zur Längsrichtung in oder an dem verbindenden Schenkel befindet.

Dabei ragen beidseits der Deichsel Ansatzstutzen nach vorne, also etwa parallel zur Deichsel, von der Welle ab, um das Aufschieben eines Handschwengels auf die Ansatzstutzen an derjenigen Seite zu ermöglichen, an der die beste Zugänglichkeit am Abschleppgerät unter dem zu bergenden Flugzeug möglich ist.

Ebenfalls von dem verbindenden Schenkel nach vorne ragen Stellhebel zum Umstellen der Ventile hervor, mit deren Hilfe der an der Hydraulikpumpe aufgebrachte Druck wechselweise an die Hubzylinder oder die Schiebezylinder geleitet wird, und - bei doppelt wirkenden Zylindern, wie sie wenigstens beim Schiebezylinder notwendig sind - dort wiederum die Einleitung in eine der beiden Kammern dieser Zylinder.

Um die mechanischen Teile, die aus der Vorderseite des verbindenden Schenkels des Abschleppgerätes hervorragen, zu schützen, läuft im Abstand vor der Vorderkante des verbindenden Schenkels des Abschleppgerätes im Abstand ein Schutzbügel um, der an den Seiten des Abschleppgerätes befestigt ist, und eine Beschädigung sowohl der Ansatzstutzen für den Handschwengel als auch der Betätigungshebel für die Ventile zu verhindern.

An der Deichsel ist das freie Ende auswechselbar, wobei dort zwischen einer Querstange zum Lenken per Hand und einer Anhängeöse zum Anhängen des Abschleppgerätes an die üblichen Anhängekupplungen von Fahrzeugen gewählt werden kann.

Damit steht ein Abschleppgerät zur Verfügung, welches aufgrund seines einfachen Aufbaus und weniger, einfacher Bedienungselemente einfach herzustellen und leicht zu bedienen ist. Zusätzlich kann dieses Abschleppgerät aufgrund seiner geringen Abmessungen von etwa 2 m Länge und 1,30 m Breite bei nur etwa 45 cm Höhe (ohne Deichsel) und einem Gewicht von nur etwa 700 kg leicht transportiert werden.

Eine Ausführungsform gemäß der Erfindung ist im folgenden anhand der Figuren beispielhaft näher beschrieben. Es zeigen
- Fig. 1: eine Aufsicht auf das Abschleppgerät und
- Fig. 2: eine Seitenansicht des Abschleppgerätes.

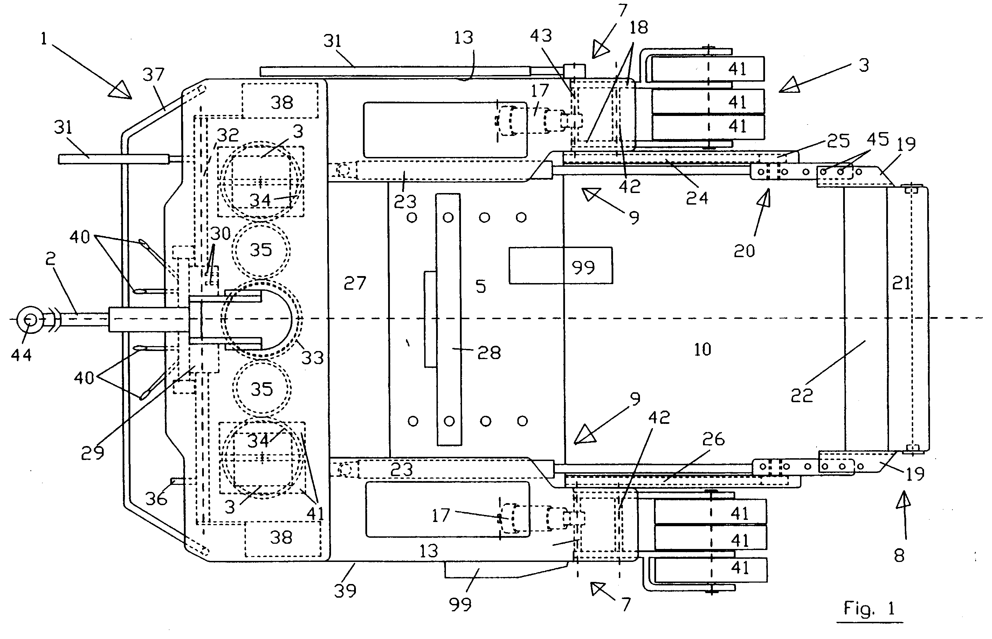

Fig. 1 zeigt in der Aufsicht die U-förmige Gestaltung des Abschleppgerätes 1, die sich aus den beiden freien Schenkeln 13 mit dem verbindenden Schenkel 14 ergibt. Der im Inneren des U befindliche Freiraum 12 wird in der Aufsicht im wesentlichen durch die fest mit den Schenkeln 13, 14 verbundene, das defekte Rad 11 tragende Plattform 5 ausgefüllt.

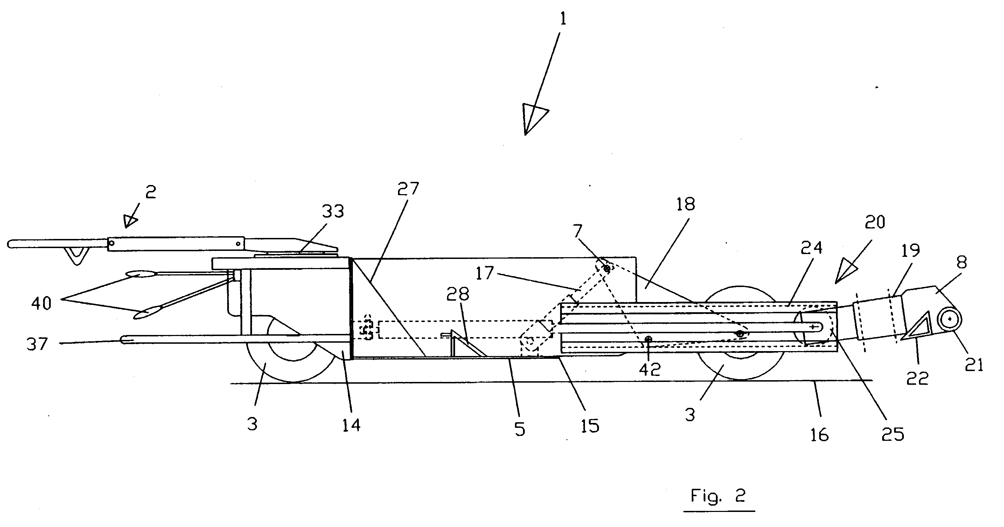

Wie Fig. 2 zeigt, liegt die Plattform in etwa auf der Höhe der Unterkante der umgebenden Schenkel 13, 14, so daß das defekte Rad 11 zur Seite und nach vorne hin bereits gegen ein Verrutschen gesichert ist, wobei das defekte Rad 11 nach vorne entweder an der festen Anschlagfläche 27 anliegt, die am vorderen Ende der Plattform 5 schräg eingesetzt und mit den umgebenden Schenkeln 13, 14 fest verbunden ist, oder mit der beweglichen Anschlagfläche 28, die je nach Erfordernis des beschädigten Rades 11 in verschiedenen Längspositionen auf der Plattform 5 aufgesteckt und befestigt werden kann.

Die freie Seite der U-förmigen Grundkonstruktion des Abschleppgerätes 1 wird durch den entfernbaren Schieber 8 geschlossen. Mit Hilfe des Schiebers 8, der in Richtung auf die Plattform 5 mittels der Zugeinrichtung 9 bewegt werden kann, wird das defekte Rad 11 auf die Plattform 5 hinaufgerollt oder hinaufgeschoben, wobei das Abschleppgerät 1 im Bereich der freien Kante 15 der Plattform 5 möglichst bis auf den Untergrund 16 abgesenkt wird, um dieses Hinaufschieben zu erleichtern.

Falls der Radgummi nicht mehr vorhanden ist, wird zusätzlich ein Felgenkeil quer über die Kante 15 gelegt, der so dimensioniert ist, daß er in das Felgenbett paßt, sodaß die Felge nicht auf ihren (in der Regel nicht mehr runden) Aussenrändern rollen muß, sondern mit dem Felgenbett dann auf dem darin plazierten Felgenkeil 99, der dicker ist als die Höhe der Felgenränder.

Das Abschleppgerät 1 besitzt vier Radeinheiten 3, von denen sich je eine am freien Ende der freien Schenkel 13 und zwei unter dem verbindenden Schenkel 14 befinden. Jede der Radeinheiten 3 besteht aus mehreren, parallel zueinander angeordneten Rollen 41, wobei die vorderen Radeinheiten 3 jeweils zwei parallele Rollen 41 aus Kunststoff oder Metall aufweisen.

Das Absenken der Hinterkante 15 der Plattform 5 geschieht mittels einer gelenkigen Verbindung der hinteren Radeinheiten 3 mit den freien Enden der freien Schenkel 13.

Zu diesem Zweck sind an jedem freien Ende eines freien Schenkels 13 zwei parallele, aus Flachmaterial erstellte, doppelarmige Hebel 18 über eine mittlere Achse 42 gelenkig mit dem jeweiligen freien Schenkel 13 verbunden. An dem über das freie Ende der freien Schenkel 13 hinausragenden Ende des Doppelhebels 18 sind die Radeinheiten 3 befestigt, während am Ende des anderen Hebelarmes über eine Achse 43 jeweils ein Hubzylinder 17 angreift, der am freien Schenkel 13 befestigt ist und dessen Wirkrichtung im Winkel zu dem ihm zugeordneten Hebelarm des Doppelhebels 18 steht.

Wie Fig. 2 zeigt, stehen die Hubzylinder 17 von vorne nach hinten schräg aufragend innerhalb der freien Schenkel 13.

Bei einem Einfahren der Hubzylinder 17 senkt sich die mittlere Achse 42 und damit das freie Ende der Schenkel 13 gegenüber den hinteren Radeinheiten 3 ab, bis die Hinterkante 15 der Plattform 5 den Untergrund 16 erreicht. Das Einfahren des Hubzylinders 17 ist aufgrund des Eigengewichtes des Abschleppgerätes 1 sowie eines eventuell auf der Plattform 5 sitzenden defekten Fahrwerkes bereits durch Öffnen der Hydraulikzufuhr des Hubzylinders 17 möglich, so daß dieser nicht unbedingt als doppelt wirkender Hydraulikzylinder ausgebildet sein muß.

Das Druckbeaufschlagen und Ausfahren des Hubzylinders 17 hebt die Achse 42 und damit auch die Plattform 5 zusammen mit einem eventuell aufgesattelten defekten Rad an, bis die Plattform 5 in etwa waagerecht steht, wie in FIg. 2 dargestellt.

In dieser Position wird das Abschleppgerät 1 zusammen mit dem abzuschleppenden Flugzeug mittels der Deichsel 2 gezogen. Das Kopfstück der Deichsel 2 ist auswechselbar zwischen einem einfachen Handgriff, der lediglich zum Lenken des Abschleppgerätes 1 dient und einer Anhängeöse 44, wie sie in Fig. 1 dargestellt ist, zum Anhängen an ein Schleppfahrzeug.

Das Heraufziehen eines defekten Rades 11 auf die Plattform 5 geschieht mittels einer Längsbewegung des Schiebers 8 gegen die Plattform 5. Zu diesem Zweck sind Laufelemente 20 auf den Innenseiten jedes freien Schenkels 13 in der Waagerechten in Längsrichtung verfahrbar, indem jedes Laufelement 20 eine Rolle 25 aufweist, die im Innenraum eines entsprechenden C-Profiles 26, welches Teil des freien Schenkels 13 ist, als Führung 24 entlangläuft.

Mit diesen Laufelementen 20 kann der Schieber 8 verbunden werden, indem durch fluchtende Bohrungen 45 in den seitlichen, parallel laufenden, in Längsrichtung liegenden Schenkeln 19 des Schiebers 8 und entsprechenden Bohrungen 45 in den Laufelementen 20 Bolzen senkrecht hindurchgesteckt und gesichert werden. Durch unterschiedliche Axialpositionen kann bereits eine grobe Anpassung an den Durchmesser des beschädigten Rades 11 erfolgen, um auf hydraulischem Wege keine allzu großen Verschiebewege des Schiebers 8 bewältigen zu müssen.

Zusätzlich kann der Schieber in der in Fig. 2 dargestellten Position eingesetzt werden, in der der schräg gestellte, fest mit den seitlichen Schenkeln 19 verbundene Schubschild 22 gegen das defekte Rad drückt.

Der Schieber 8 kann jedoch in der waagerechten Ebene auch um 180° gedreht eingesetzt werden, so daß dann die Schubrolle 21 gegen das defekte Rad 11 drücken würde.

Zusätzlich kann über entsprechende Durchsteckbolzen oder andere Rasteinrichtungen die Schrägstellung der seitlichen Schenkel 19 des Schiebers 8 gegenüber den Laufelementen 20 bestimmt werden, wodurch sich die Höhenlage der Schubrolle 21 und des Schubschildes 22 verändert, um möglichst etwa in der Mitte des defekten Rades anzuliegen.

Zur Aufnahme des defekten Rades 11 wird der Schieber 8 vollständig entfernt oder von einem der freien Schenkel 13 gelöst, und um den anderen Schenkel herum weggeklappt, um das dann U-förmige Abschleppgerät 1 mit der freien Kante 15 der Plattform 5 bis in Anlage an das defekte Rad 11 im abgesenkten Zustand heranfahren zu können.

Anschließend wird der Schieber 8 hinter dem Rad 11 wieder mit beiden freien Schenkeln 13 verbunden und die hydraulischen Schiebezylinder 23, die in den freien Schenkeln 13 in Längsrichtung angeordnet sind, bewegen die Laufelemente 20 auf die Plattform 5 zu, und damit auch den Schieber 8.

Im verbindenden Schenkel des Abschleppgerätes 1 sind zum einen mittig die Deichsel 2 mittels eines Drehkranzes 33 gelagert und zum anderen die beiden vorderen Radeinheiten 3 mittels Drehkränzen 34, die jeweils parallele, im wesentlichen senkrechte Drehachsen besitzen.

Um einen Lenkeinschlag der Deichsel 2 gleichwirkend auf die vorderen Radeinheiten 3 zu übertragen, besitzt jeder der Drehkränze 33, 34 ein waagerecht liegendes Zahnrad, wobei zwischen dem mittleren Drehkranz 33 und den beiden außen liegenden Drehkränzen 34 je ein Zwischenzahnrad 35 kämmend eingesetzt ist. Eine Auslenkung der Deichsel 2 wird damit in eine gleich große und gleichgerichtete Auslenkung der beiden vorderen Radeinheiten 3 umgesetzt.

Zusätzlich ist im vorderen, verbindenden Schenkel 14 des Abschleppgerätes 1 eine hydraulische Pumpe 29 untergebracht, die mittels einer Drehung der quer zur Längsrichtung 10 verlaufenden Welle 32 betätigt wird. Die Welle 32 erstreckt sich durchgehend beidseits der Deichsel 2, und besitzt auf beiden Seiten parallel zur Längsrichtung 10 nach vorne abragende Ansatzstutzen 36, auf welche wahlweise einseitig oder auch beidseitig Handschwengel 31 aufgesteckt werden können, um die Pumpe 29 zu betätigen.

An der Pumpe befinden sich Ventile 30, die mittels der ebenfalls nach vorne abragenden und wiederum doppelt, beidseits der Deichsel 2 ausgebildeten, Handhebel 40 verstellt werden. Mit Hilfe der Ventile 30 wird die Beaufschlagung wahlweise der Hubzylinder 17 oder der Schiebezylinder 23 gewählt, wobei mindestens der Schiebezylinder 23 ein doppelt wirkender Hydraulikzylinder sein muß, der sowohl in Einfahr- als auch in Ausfahrrichtung mit Druck beaufschlagbar ist.

Sowohl die Handhebel 40 als auch die Ansatzstutzen 36 werden durch einen im wesentlichen in der Waagerechten liegenden, U-förmigen Schutzbügel 37 gesichert, der unterhalb der Ebene der Hebel 40 angeordnet ist und nach vorne, also in Richtung der Deichsel 2, über die Handhebel 40 und die Ansatzstutzen 36 hinausragt und an den vorderen Ecken oder den Außenkanten des Abschleppgerätes 1 fest angeordnet ist.

Im vorderen, verbindenden Schenkel 14 sind ferner beidseits Hydrauliköl-Behälter 38 zur Versorgung der hydraulischen Pumpe 29 angeordnet, um eine gleichmäßige Gewichtsverteilung und eine gleichmäßigeBewegung der Zylinder zu erreichen.

Während des Verfahrens des Abschleppgerätes 1 werden die nicht benötigten Handschwengel 31 seitlich außen in entsprechenden Halterungen an den freien Schenkeln 13 untergebracht, wie in der oberen Bildhälfte der Fig. 1 dargestellt.

Sowohl der verbindende Schenkel 14 als auch die freien Schenkel 13 des Abschlepgerätes 1 sind mittels Abdeckblechen 39, die eine etwa hutförmige Querschnittskontur besitzen, gegen Näße und vor allem Beschädigungen von oben geschützt.

## Patentansprüche

1. Abschleppgerät (1) für Fahrzeuge mit defektem Rad, insbesondere für Luftfahrzeuge, mit
- einer Deichsel (2) zum Verfahren des Abschleppgerätes (1),
- wenigstens drei Radeinheiten, von denen wenigstens eine Radeinheit lenkbar ist,
- einer in der Aufsicht U-förmigen Gestaltung des Abschleppgerätes (1) mit einer das defekte Rad (11) tragenden Plattform (5) im Freiraum (12) des U-förmigen Abschleppgerätes,
- einer Radeinheit (3) an jedem freien Schenkel (13) des U-förmigen Abschleppgerätes (1), wobei
- eine hintere, freie Kante (15) der Plattform (5) bis auf den Untergrund (16) absenkbar ist,
**dadurch gekennzeichnet, daß**
a) die Absenkeinrichtung (7) der Plattform (5) hydraulisch betätigbar ist,
b) ein Schieber (8) zwischen die freien Schenkel (13) des U-förmigen Abschleppgerätes (1) entfernbar eingesetzt ist, indem der Schieber mittels Steckbolzen gegenüber den freien Schenkeln (13) befestigt ist und
c) eine Zugeinrichtung (9) den eingesetzten Schieber (8) in Längsrichtung entlang des U-förmigen Abschleppgerätes (1) verfahren kann.

2. Abschleppgerät (1) für Fahrzeuge mit defektem Rad, insbesondere für Luftfahrzeuge, mit
- einer Deichsel (2) zum Verfahren des Abschleppgerätes (1),
- wenigstens drei Radeinheiten, von denen wenigstens eine Radeinheit lenkbar ist,
- einer in der Aufsicht U-förmigen Gestaltung des Abschleppgerätes (1) mit einer das defekte Rad (11) tragenden Plattform (5) im Freiraum (12) des U-förmigen Abschleppgerätes,
- einer Radeinheit (3) an jedem freien Schenkel (13) des U-förmigen Abschleppgerätes (1), wobei
- eine hintere, freie Kante (15) der Plattform (5) bis auf den Untergrund (16) absenkbar ist,
**dadurch gekennzeichnet, daß**
a) die Absenkeinrichtung (7) der Plattform (5) hydraulisch betätigbar ist,
b) ein Schieber (8) zwischen die freien Schenkel (13) des U-förmigen Abschleppgerätes (1)auf einfache Art und Weise entfernbar eingesetzt ist indem der Schieber (8) gegenüber dem einen freien Schenkel (13) um eine im wesentlichen senkrechte oder parallel zur Längsrichtung des Abschleppgerätes waagerechte Schwenkachse befestigt ist und die Verbindung des Schiebers (8) zum anderen freien Schenkel (13) entfernbar gestaltet ist und
c) eine Zugeinrichtung (9) den eingesetzten Schieber (8) in Längsrichtung entlang des U-förmigen Abschleppgerätes (1) verfahren kann.

3. Abschleppgerät nach Anspruch 1,
**dadurch gekennzeichnet, daß**
die Deichsel leicht demontierbar ist und gegen die spezifische Schleppstange eines Flugzeugtypes ersetzt werden kann.

4. Abschleppgerät nach Anspruch 1 oder 2,
**dadurch gekennzeichnet, daß**
eine Deichsel (2) sowie zwei von der Deichsel (2) gelenkte Radeinheiten (3) im verbindenden Schenkel (14) des U-förmigen Abschleppgerätes (1) angeordnet sind.

5. Abschleppgerät nach einem der vorhergehenden Ansprüche,
**dadurch gekennzeichnet, daß**
die Absenkeinrichtung (7) in jedem der freien Schenkel (13) jeweils einen hydraulischen Hubzylinder (17) umfaßt, die schräg nach oben aufragend angeordnet sind und über jeweils einen zweiarmigen Hebel (18) die an den freien Schenkeln (13) angeordneten Radeinheiten (3) gegenüber dem Abschleppgerät (1) in ihrer Höhenlage verschwenken.

6. Abschleppgerät nach einem der vorhergehenden Ansprüche,
**dadurch gekennzeichnet, daß**
der Schieber (8) zwei parallele seitliche Schenkel (19) aufweist, die in verschiedenen Positionen in Längsrichtung (10) an Laufelementen (20), die entlang der freien Schenkel (13) bewegbar sind, befestigbar sind und der Schieber (8) zwischen den seitlichen Schenkeln (19) in Längsrichtung hintereinander eine drehbar gelagerte Schubrolle (21) sowie einen Schubschild (22) aufweist.

7. Abschleppgerät nach Anspruch 6,
**dadurch gekennzeichnet, daß**
der Schieber (8) mit der Schubrolle (21) oder dem Schubschild (22) zur Deichsel gewandt an den Laufelementen (20) befestigbar ist.

8. Abschleppgerät nach einem der vorhergehenden Ansprüche,
**dadurch gekennzeichnet, daß**
die Laufelemente (20) mittels jeweils wenigstens einem Schiebezylinder (23) waagerecht entlang längs gerichteter Führungen (24) der freien Schenkel (13) verschiebbar sind.

9. Abschleppgerät nach Anspruch 8,
**dadurch gekennzeichnet, daß**
jedes Laufelement (20) wenigstens eine Rolle (25) umfaßt, die in einem zum Freiraum (12) hin offenen C-Profil (26) am freien Schenkel (13) läuft.

10. Abschleppgerät nach einem der vorhergehenden Ansprüche,
**dadurch gekennzeichnet, daß**
die Plattform (5) an ihrem dem verbindenden Schenkel (14) des Abschleppgerätes (1) zugewandten Ende eine schräg nach oben ragende, feste Anschlagfläche (27) aufweist.

11. Abschleppgerät nach einem der vorhergehenden Ansprüche,
**dadurch gekennzeichnet, daß**
die Plattform (5) auf ihrer Oberseite eine quer zur Längsrichtung (10) stehende, in Längsrichtung verstellbare, schräg nach oben aufragende, feste Anschlagfläche (28) aufweist.

12. Abschleppgerät nach einem der vorhergehenden Ansprüche,
**dadurch gekennzeichnet, daß**
im verbindenden Schenkel (14) des Abschleppgerätes (1) wenigstens eine hydraulische Pumpe (29) angeordnet ist, die wahlweise die Hubzylinder (17) und/oder die Schiebezylinder (23) beaufschlagt.

13. Abschleppgerät nach Anspruch 11,
**dadurch gekennzeichnet, daß**
die hydraulische Pumpe (29) über wenigstens ein handbetätigbares Ventil (30) gesteuert wird, deren Bedienelemente jeweils doppelt, nämlich auf beiden Seiten der Deichsel, vorhanden sind.

14. Abschleppgerät nach Anspruch 11 oder 12,
**dadurch gekennzeichnet, daß**
die hydraulische Pumpe (29) mittels eines Handschwengels (31) betätigt wird, für welchen beidseits der mittigen Deichsel (2) parallel zur Deichsel je ein Ansatzsstutzen (36) nach vorne abstrebend auf einer gemeinsamen Welle (32) angeordnet ist, die die hydraulische Pumpe (29) antreibt.

15. Abschleppgerät nach einem der vorhergehenden Ansprüche,
**dadurch gekennzeichnet, daß**
die Deichsel (2) sowie die beiden vorderen Radeinheiten (3) mittels Drehkränzen (33, 34) deren Drehachsen im wesentlichen senkrecht stehen, im dem Abschleppgerät gelagert sind und die Drehkränze (33, 34) über Zwischenzahnräder (35) wirkungsgleich miteinander gekoppelt sind.

16. Abschleppgerät nach Anspruch 1,
**dadurch gekennzeichnet, daß**
die tragende Plattform (5) mit den freien Schenkeln (13) des U-förmigen Abschleppgerätes (1) fest verbunden ist.

## Claims

1. A towing apparatus (1) for vehicles with a defective wheel, in particular for aircraft, comprising
- a towbar (2) for moving the towing apparatus (1),
- at least three wheel units of which at least one wheel unit is steerable,
- a configuration of the towing apparatus (1), which is U-shaped in plan view, with a platform (5) for carrying the defective wheel (11), in the free space (12) of the U-shaped towing apparatus,
- a wheel unit (3) at each free limb (13) of the U-shaped towing apparatus (1), wherein
- a rear free edge (15) of the platform (5) can be lowered on to the ground (16),
characterised in that
a) the lowering means (7) of the platform (5) is hydraulically actuable,
b) a slider (8) is removably inserted between the free limbs (13) of the U-shaped towing apparatus (1), by the slider being fixed with respect to the free limbs (13) by means of cotter pins, and
c) a pulling means (9) can move the inserted slider (8) in the longitudinal direction along the U-shaped towing apparatus (1).

2. A towing apparatus (1) for vehicles with a defective wheel, in particular for aircraft, comprising
- a towbar (2) for moving the towing apparatus (1),
- at least three wheel units of which at least one wheel unit is steerable,
- a configuration of the towing apparatus (1), which is U-shaped in plan view, with a platform (5) for carrying the defective wheel (11), in the free space (12) of the U-shaped towing apparatus,
- a wheel unit (3) at each free limb (13) of the U-shaped towing apparatus (1), wherein
- a rear free edge (15) of the platform (5) can be lowered on to the ground (16),
characterised in that
a) the lowering means (7) of the platform (5) is hydraulically actuable,
b) a slider (8) is removably inserted in a simple manner between the free limbs (13) of the U-shaped towing apparatus (1) by the slider (8) being fixed with respect to the one free limb (13) about a pivot axis which is substantially perpendicular or horizontal in parallel relationship to the longitudinal direction of the towing apparatus and the connection of the slider (8) to the other free limb (13) being adapted to be removable, and
c) a pulling means (9) can move the inserted slider (8) in the longitudinal direction along the U-shaped towing apparatus (1).

3. A towing apparatus according to claim 1 characterised in that the towbar is easily removable and can be replaced by the specific towing bar of a type of vehicle.

4. A towing apparatus according to claim 1 or claim 2 characterised in that a towbar (2) and two wheel units (3) which are steered by the towbar (2) are arranged in the connecting limb (14) of the U-shaped towing apparatus (1).

5. A towing apparatus according to one of the preceding claims characterised in that the lowering means (7) includes in each of the free limbs (13) respective hydraulic stroke cylinders (17) which are arranged to project inclinedly upwardly and which by way of a respective two-armed lever (18) pivot the wheel units (3) arranged on the free limbs (13) relative to the towing apparatus (1) in their position in respect of height.

6. A towing apparatus according to one of the preceding claims characterised in that the slider (8) has two parallel lateral limbs (19) which can be fixed in different positions in the longitudinal direction (10) on runner elements (20) which are movable along the free limbs (13) and the slider (8) has between the lateral limbs (19) in succession in the longitudinal direction a rotatably mounted thrust roller (21) and a thrust plate (22).

7. A towing apparatus according to claim 6 characterised in that the slider (8) can be fixed to the runner elements (20) with the thrust roller (21) or the thrust plate (22) towards the towbar.

8. A towing apparatus according to one of the preceding claims characterised in that the runner elements (20) are horizontally displaceable along longitudinally directed guides (24) of the free limbs (13) by means of at least one respective thrust cylinder (23).

9. A towing apparatus according to claim 8 characterised in that each runner element (20) includes at least one roller (25) which runs in a C-shaped member (26), which is open towards the free space (12), on the free limb (13).

10. A towing apparatus according to one of the preceding claims characterised in that at its end towards the connecting limb (14) of the towing apparatus (1), the platform (5) has an inclinedly upwardly extending, fixed abutment surface (27).

11. A towing apparatus according to one of the preceding claims characterised in that on its top side the platform (5) has an inclinedly upwardly projecting, fixed abutment surface (28) which is disposed transversely to the longitudinal direction (10) and which is adjustable in the longitudinal direction.

12. A towing apparatus according to one of the preceding claims characterised in that disposed in the connecting limb (14) of the towing apparatus (1) is at least one hydraulic pump (29) which selectively actuates the stroke cylinders (17) and/or the thrust cylinders (23).

13. A towing apparatus according to claim 12 characterised in that the hydraulic pump (29) is controlled by at least one manually actuable valve (30), the operating elements of which are provided in duplicate, namely on both sides of the towbar.

14. A towing apparatus according to claim 12 or claim 13 characterised in that the hydraulic pump (29) is actuated by means of a hand lever (31), for which a respective attachment portion (36) is arranged on each side of the central towbar (2) parallel to the towbar and extending forwardly, on a common shaft (32) which drives the hydraulic pump (29).

15. A towing apparatus according to one of the preceding claims characterised in that the towbar (2) and the two front wheel units (3) are mounted in the towing apparatus by means of turntables (33, 34) whose axes of rotation are substantially perpendicular and the turntables (33, 34) are coupled together for the same action by means of intermediate gears (35).

16. A towing apparatus according to claim 1 characterised in that the carrying platform (5) is fixedly connected to the free limbs (13) of the U-shaped towing apparatus (1).

## Revendications

1. Appareil de remorquage (1) pour des véhicules ayant une roue défectueuse, notamment pour des avions, comportant
- un timon (2) pour déplacer l'appareil de remorquage (1),
- au moins trois ensembles de roues, parmi lesquels un ensemble de roues au moins est orientable,
- une conformation en U de l'appareil de remorquage (1), en vue de dessus, avec une plateforme (5) qui porte la roue (11) défectueuse et est disposée dans l'espace libre de l'appareil de remorquage (1) conformé en U,
- un ensemble de roues (3) sur chaque branche (13) libre de l'appareil de remorquage (1) conformé en U,
- un bord (15) libre arrière de la plateforme (5) pouvant être abaissé jusqu'au niveau du sol (16),
caractérisé par le fait
a) que le dispositif (7) d'abaissement de la plateforme (5) est actionné par des moyens hydrauliques,
b) qu'une traverse (8) mobile est montée de manière démontable entre les branches (13) libres de l'appareil de remorquage (1) conformé en U, la traverse étant fixée aux branches (13) libres au moyen de goupilles et
c) qu'un dispositif de traction (9) peut déplacer la traverse (8) mobile montée dans la direction longitudinale de l'appareil de remorquage (1).

2. Appareil de remorquage (1) pour des véhicules ayant une roue défectueuse, notamment pour des avions, comportant
- un timon (2) pour déplacer l'appareil de remorquage (1),
- au moins trois ensembles de roues, parmi lesquels un ensemble de roues au moins est orientable,
- une conformation en U de l'appareil de remorquage (1), en vue de dessus, avec une plateforme (5) qui porte la roue (11) défectueuse et est disposée dans l'espace libre de l'appareil de remorquage (1) conformé en U,
- un ensemble de roues (3) sur chaque branche (13) libre de l'appareil de remorquage (1) conformé en U,
- un bord (15) libre arrière de la plateforme (5) pouvant être abaissé jusqu'au niveau du sol (16)
caractérisé par le fait
a) que le dispositif (7) d'abaissement de la plateforme (5) est actionné par des moyens hydrauliques,
b) qu'une traverse (8) mobile est montée de manière facilement démontable entre les branches (13) libres de l'appareil de remorquage (1) conformé en U, la traverse (8) mobile étant fixée à l'une des branches (13) libres avec possibilité de pivotement autour d'un axe de pivotement horizontal sensiblement perpendiculaire ou parallèle à la direction longitudinale de l'appareil de remorquage (1) et la liaison entre la traverse (8) mobile et l'autre branche (13) libre étant démontable et
c) qu'un dispositif de traction (9) peut déplacer la traverse (8) mobile montée dans la direction longitudinale de l'appareil de remorquage (1).

3. Appareil de remorquage selon la revendication 1, caractérisé par le fait que le timon est facilement démontable et peut être remplacé par la barre de traction spécifique à un type d'avion.

4. Appareil de remorquage selon la revendication 1 ou 2, caractérisé par le fait qu'un timon (2) ainsi que deux ensembles de roues (3)guidés par le timon (2) sont disposés dans la branche (14) transversale de liaison de l'appareil de remorquage (1) conformé en U.

5. Appareil de remorquage selon l'une des revendications précédentes, caractérisé par le fait que le dispositif d'abaissement (7) comprend à chaque fois, sur chacune des branches (13) libres, un vérin (17) hydraulique qui est incliné et fait saillie vers le haut et qui, par l'intermédiaire d'un levier (18) à deux bras, fait varier par pivotement des ensembles de roues (3) montés sur les branches (13) libres la hauteur par rapport à l'appareil de remorquage (1).

6. Appareil de remorquage selon l'une des revendications précédentes, caractérisé par le fait que la traverse (8) mobile présente deux branches (19) latérales parallèles qui peuvent être fixées dans différentes positions dans la direction longitudinale (10) sur des éléments mobiles (20) qui se déplacent le long des branches (13) libres et que la traverse (8) mobile, entre les branches (19) latérales, présente successivement dans la direction longitudinale un galet (21) rotatif et un bouclier (22) mobile.

7. Appareil de remorquage selon la revendication 6, caractérisé par le fait que la traverse (8) mobile peut être fixée aux éléments mobiles (20) avec le rouleau (21) mobile ou le bouclier (22) mobile dirigé vers le timon.

8. Appareil de remorquage selon l'une des revendications précédentes, caractérisé par le fait que les éléments mobiles (20) peuvent être déplacés à l'aide chacun d'au moins un vérin (23) horizontalement le long de glissières (24) disposées longitudinalement sur les branches libres (13).

9. Appareil de remorquage selon la revendication 8, caractérisé par le fait que chaque élément mobile (20) comprend au moins un galet (25) qui roule dans un profilé (26) en C prévu sur la branche libre (13), ouvert en direction de l'espace libre (12) .

10. Appareil de remorquage selon l'une des revendications précédentes, caractérisé par le fait que la plateforme (5) comporte, à son extrémité tournée vers la branche (14) transversale de l'appareil de remorquage (1), une surface de butée (27) fixe inclinée, saillante vers le haut.

11. Appareil de remorquage selon l'une des revendications précédentes, caractérisé par le fait que la plateforme (5) comporte sur sa face supérieure, une surface de butée (28) fixe inclinée, saillante vers le haut, qui est disposée transversalement à la direction longitudinale (10) et est réglable dans la direction longitudinale.

12. Appareil de remorquage selon l'une des revendications précédentes, caractérisé par le fait qu'au moins une pompe hydraulique (29) est disposée dans la branche (14) transversale de l'appareil de remorquage (1), laquelle pompe alimente de manière élective les vérins (17) et/ou le vérin (23).

13. Appareil de remorquage selon la revendication 11, caractérisé par le fait que la pompe hydraulique (29) est commandé par au moins une valve (30) actionnée manuellement, dont les éléments de commande sont présents en double chaque fois, à savoir de chaque côté du timon.

14. Appareil de remorquage selon la revendication 11 ou 12, caractérisé par le fait que la pompe hydraulique (29) est actionnée à l'aide d'une manette (31) oscillante, pour laquelle un bossage (36) orienté vers l'avant est prévu de part et d'autre du timon (2), de part et d'autre de celui-ci, sur un arbre (32) commun qui commande la pompe hydraulique (29).

15. Appareil de remorquage selon l'une des revendications précédentes, caractérisé par le fait que le timon (2) et les deux ensembles de roues (3) avant sont montés sur l'appareil de remorquage au moyen de couronnes (33, 34) de pivotement, dont les axes de rotation sont sensiblement verticaux et par le fait que les couronnes de pivotement (33, 34) sont couplées entre elles par des roues dentées (35) intermédiaires, de manière à agir dans le même sens.

16. Appareil de remorquage selon la revendication 1, caractérisé par le fait que la plateforme (5) porteuse est reliée de façon fixe aux branches (13) libres de l'appareil de remorquage (1) conformé en U.
